# EUROPÄISCHE PATENTSCHRIFT

(11) **EP 3 425 560 B1**
(45) Veröffentlichungstag und Bekanntmachung des Hinweises auf die Patenterteilung: **17.11.2021**
(21) Anmeldenummer: 18181355.1
(22) Anmeldetag: 03.07.2018
(51) Int. Cl.: G06K 9/00, H04N 1/00

(54) **VORRICHTUNG UND VERFAHREN ZUR ERFASSUNG VON BIOMETRISCHEN MERKMALEN EINES GESICHTS EINER PERSON**
DEVICE AND METHOD FOR DETECTING BIOMETRIC FEATURES OF A PERSON'S FACE
DISPOSITIF ET PROCÉDÉ DE DÉTECTION DES CARACTÉRISTIQUES BIOMÉTRIQUES D'UN VISAGE D'UNE PERSONNE

(30) Priorität: 06.07.2017 DE 102017115136
(43) Veröffentlichungstag der Anmeldung: 09.01.2019
(73) Patentinhaber: Bundesdruckerei GmbH, 10969 Berlin (DE)
(72) Erfinder: Wolf, Andreas, 13158 Berlin (DE); Rabeler, Uwe, 30453 Hannover (DE)
(74) Vertreter: Hentrich Patentanwälte PartG mbB

(56) Entgegenhaltungen:
- DE-A1- 3 929 273
- DE-A1-102011 079 285
- DE-A1-102013 203 433
- DE-A1-102014 112 494
- US-A- 5 572 596
- US-A1- 2002 181 774
- US-A1- 2003 169 339
- US-A1- 2007 103 729
- US-A1- 2012 314 914

## Beschreibung

Die Erfindung betrifft eine Vorrichtung zur Erfassung biometrischer Merkmale eines Gesichts einer Person. Weiterhin betrifft die Erfindung ein entsprechendes Verfahren.

Eine Vorrichtung gemäß dem Oberbegriff des Anspruchs 1 ist beispielsweise aus der DE 10 2014 112 494 A1 bekannt. Darin ist eine Vorrichtung zur Erfassung biometrischer Merkmale einer Person beschrieben, welche eine Kamera und zwei Spiegelanordnungen umfasst. Die erste Spiegelanordnung dient der Faltung eines zwischen dem zu erfassenden Gesicht der Person und der Kamera verlaufenden Strahlenganges. Die zweite Spiegelanordnung umfasst einen semitransparenten Spiegel, der Licht transmittiert zur Erfassung des Gesichts mittels der Kamera und der Licht reflektiert zur Spiegelung des Gesichts der Person.

Die Herausforderung bei solchen Vorrichtungen besteht darin, ein Bild zu erzeugen, welches möglichst frei von Abbildungsfehlern ist. Die biometrischen Merkmale des Gesichts einer Person sind deutlich darzustellen. Dies spielt insbesondere eine Rolle im Bereich der automatisierten Gesichtserkennung bei Grenzkontrollen. Diese ABC-Systeme (engl. "automated border control") werden häufig an Flughäfen eingesetzt, um die Identität einer Person zweifelsfrei feststellen zu können (in Deutschland: "EasyPass"). Dabei wird das Passbild einer Person automatisch mit der Person selbst bzw. mit einem von der Person erfassten Bild verglichen. Die auftretenden Abbildungsfehler können zu Falschrückweisungen bei der automatisierten Kontrolle führen, was eine wiederholte automatische, eine manuelle oder menschliche Überprüfung beispielsweise durch einen Grenzpolizisten erfordert. Diese Praxis wird als zeit- und kostenintensiv eingestuft und stellt darüber hinaus ein Sicherheitsrisiko dar.

Um die Anzahl solcher manueller Prüffälle oder die Anzahl an automatischen Falschrückweisungen zu reduzieren, ist es bereits bei der Erstellung des Passbildes notwendig, dass dieses eine hohe Bildqualität aufweist. Auch der automatisierte Abgleich bei ABC-Systemen ist mit einer hohen Bildqualität durchzuführen. Vermehrt wird bei der Erstellung der Passbilder nicht mehr auf einen professionellen Fotografen, sondern auf Passbildautomaten zurückgegriffen, deren Bildqualität aber häufig schlecht ist aufgrund der Abbildungsfehler einerseits und aufgrund der fehlerhaften Haltung des Benutzers bzw. der häufig nicht optimalen Benutzerführung andererseits.

DE 39 29 273 A1 beschreibt eine fotografische Aufnahmeanordnung bei der eine Kamera in einem Gehäuse angeordnet ist. Zudem weist die Vorrichtung einen Umlenkspiegel auf zur Faltung des Strahlenganges sowie eine Bedieneinheit, die unter einem Neigungswinkel geneigt bezüglich der Gehäusefront angeordnet ist.

Die DE 10 2013 203 433 A1 beschreibt eine Vorrichtung zur Erfassung personenspezifischer Daten einer Person mit einer Beleuchtungseinrichtung, die um einen semi-transparenten Spiegel herum angeordnet ist. Hierbei werden mittels einer Kamera zwei Gesichtsbilder aufgezeichnet bei unterschiedlicher Ausleuchtung des Gesichts der Person. Auf diese Weise lässt sich durch eine Differenzbildung der Hintergrund aus dem Gesichtsbild entfernen.

Auch in der DE 10 2014 11 494 A1 ist eine Vorrichtung zur Erfassung biometrischer Merkmale eines Gesichts, einer Person und ein Verfahren zur Erfassung biometrische Merkmale beschrieben. Die Vorrichtung zur Erfassung biometrische Merkmale eines Gesichts umfasst hierbei eine Kamera, die auf eine erste Spiegelanordnung gerichtet ist, um einen auf eine zweite Spiegelanordnung treffenden Strahlengang zu erfassen, der über die erste Spiegelanordnung in Richtung der Kamera abgelenkt wird: Dies hat den Vorteil, dass die Kamera in einer beliebigen Ausrichtung bezüglich der Person angeordnet sein kann und vorzugsweise so montiert ist, dass ihr "Blick" nach unten weist, so dass eine Verschmutzung des Linsensystems der Kamera mit Staub minimiert wird.

Die DE 10 2014 112 494 A1 beschreibt eine Vorrichtung zur Erfassung biometrischer Merkmale eines Gesichts einer Person.

Die US 5 572 596 A beschäftigt sich mit einer Vorrichtung zur Erkennung der Iris und zur Verarbeitung des von der Iris aufgezeichneten Bildes.

In der US 2003/0169339 A1 sind ein System und ein Verfahren zur automatischen Verfolgung eines Objekts mittels einer Kamera bspw. während einer Videokonferenz gezeigt.

In der US 2012/0314914 A1 sind ein Verfahren und eine Vorrichtung zur Gesichtserkennung beschrieben. Die Vorrichtung umfasst eine digitale Videokamera und einen IR-Emitter sowie zwei IR-Detektoren. Die Vorrichtung kann automatisch gestartet werden, beispielsweise über einen Bewegungssensor, wobei die Videokamera überprüft, ob das Gesicht passend zur Kamera ausgerichtet und vollständig von ihr aufgenommen wird.

Die US 2007/0103729 offenbart ein Verfahren um ein Passbild zu erstellen und auszudrucken, wobei die Vorrichtung einen "herkömmlichen" Passbildautomat mit einer Digitalkamera und einem Display betrifft.

Die US 2002/0 181 774 A1 beschreibt ein Verfahren zur Abbildung der Augen eines Fahrers, wobei die Augen des Fahrers auch dann erkannt werden, wenn er eine Brille trägt. Die Brille wird unter anderem anhand der Reflektion des Brillenglases detektiert.

Der Erfindung liegt daher die Aufgabe zugrunde, eine Vorrichtung und ein Verfahren der eingangs genannten Art bereitzustellen, bei denen die Qualität der erfassten biometrischen Daten des Gesichts und damit die Abbildung verbessert ist bei gleichzeitig kompaktem Aufbau.

Die die Vorrichtung betreffende Aufgabe wird mit einer Vorrichtung gemäß dem Merkmalsbestand des Anspruchs 1 gelöst.

Sie umfasst insbesondere ein Gehäuse, welches eine der Person zugewandte Gehäusefront aufweist und in welchem eine eine erste Brennweite aufweisende Kamera zur Erfassung der biometrischen Merkmale und ein Spiegel zur Faltung eines zwischen dem Gesicht der Person und der Kamera verlaufenden Strahlengangs angeordnet sind. Weiterhin ist eine mit einer Auswerte- und/oder Steuereinheit drahtlos oder drahtgebunden in Kommunikationsverbindung stehenden Bedieneinheit vorgesehen, welche zwischen der Gehäusefront und der Person angeordnet ist. Erfindungsgemäß ist vorgesehen, dass zur Erzeugung einer vorgegebenen Länge des Strahlengangs die Bedieneinheit, insbesondere deren Display, geneigt unter einem Neigungswinkel bezüglich der, vorzugsweise vertikal ausgerichteten, Gehäusefront angeordnet ist.

Durch die gegenüber der Gehäusefront geneigt angeordnete Bedieneinheit lässt sich eine vorgebbare optische Weglänge zwischen dem aufzunehmenden Gesicht der Person und dem Gehäuse und damit der Kamera innerhalb des Gehäuses einhalten. Um Abbildungsfehler zu minimieren und um Passbilder zu erzeugen, die den Vorgaben der ISO 19794-5 (erste Edition, ausgegeben 2005) für Gesichtsbilder genügen, ist ein Mindestabstand zwischen der Kamera und dem Gesicht bzw. eine Mindestlänge des Strahlengangs von 120 Zentimetern (cm) einzuhalten. Bevorzugt ist eine optische Weglänge zwischen der Kamera und dem Gesicht von zwischen 120 Zentimetern und 180 Zentimetern, weiterhin vorzugsweise zwischen 140 Zentimetern und 160 Zentimetern, insbesondere von ca. 150 Zentimetern.

Durch die geneigt angeordnete Bedieneinheit wird also sichergestellt, dass die Person einen Mindestabstand - in Abhängigkeit des Neigungswinkels der Bedieneinheit - von etwas mehr als einer Armlänge zur Gehäusefront einhält. Der Neigungswinkel beträgt bevorzugt zwischen 20 Grad und 60 Grad, weiterhin vorzugsweise zwischen 30 Grad und 50 Grad, insbesondere 40 Grad. Da die Armlänge des Menschen in bekannten Grenzen variiert, kann auf diese Weise auf eine Entfernung der Person zur Gehäusefront von 50 Zentimetern bis 70 Zentimetern geschlossen werden. Dies führt im Vergleich zu horizontalen ausgerichteten Bedieneinheiten zu einem verlängerten Strahlengang zwischen dem Gesicht und der Kamera. In der Regel betätigt die Person die Bedieneinheit mit ihren Händen. Die Bedieneinheit ist dabei also derart angeordnet, dass bei einer durchschnittlichen Armlänge (s.o.), die die Bedieneinheit betätigende Person in einem optimalen Abstand zur Kamera positioniert ist.

Der durch die Bedieneinheit erzwungene größere optische Abstand des Gesichts vom Spiegel bringt in Verbindung mit der Faltung des Strahlengangs den Vorteil mit sich, dass ein kleinerer Spiegel verwendet werden kann, wodurch die Vorrichtung bzw. deren Gehäuse kompakter und kostengünstiger gestaltet werden können. Die Vorrichtung kann dabei sowohl zur Erstellung von Passbildern als auch zum automatisierten Abgleich eines Passbildes mit einer Person dienen. Für die Durchführung eines Vergleiches einer Person mit einem Passbild verwendete biometrische Merkmale können dabei die Farb- und/oder Formgebung der Iriden, der Augenabstand, die Stirnhöhe, die Form und Lage des Mundes, die Form und Lage der Nase und der Wangenknochen, die Anordnung der Blutgefäße etc. sein.

Im Rahmen der Erfindung ist es von Vorteil, wenn eine Übersichtskamera mit einer zweiten Brennweite vorgesehen ist, wobei die Länge eines zweiten Strahlengangs zwischen der Übersichtskamera und dem Gesicht der Person kleiner ist als die Länge des Strahlengangs zwischen der Kamera und dem Gesicht der Person. Während die Länge des ersten Strahlenganges zwischen dem Gesicht und der Kamera ca. 150 Zentimetern beträgt, liegt die Länge des zweiten Strahlengangs zur Übersichtskamera vorzugsweise in einem Bereich zwischen ca. 90 Zentimetern bis ca. 130 Zentimetern. Mit Hilfe der Übersichtskamera lässt sich ein Übersichtsbild erstellen und es können die Position und die Haltung des Kopfes der Person überprüft werden. Hierzu ist die Übersichtskamera vorzugsweise ebenfalls mittels einer Kommunikationsverbindung mit der Auswerte- und/oder Steuereinheit verbunden.

Weil der zweite Strahlengang bzw. die zweite optische Weglänge vom Gesicht zur Übersichtskamera kürzer ist als die Länge des Strahlengangs zwischen dem Gesicht und der Kamera, lässt sich durch die unterschiedlichen Abbildungseigenschaften des durch die Übersichtskamera und des durch die Kamera aufgenommenen Bildes eine Tiefeninformation ermitteln. Mit dieser Tiefeninformation und ggfs. unter Zuhilfenahme der Auswerte- und/oder Steuereinheit lässt sich dann eine dreidimensionale Information über das Gesicht bzw. den Kopf generieren. Anhand dieser dreidimensionalen Information kann im Rahmen einer "presentation attack detection" festgestellt werden, ob das abzubildende Objekt dreidimensional oder zweidimensional ist; ob es sich also lediglich um ein Abbild einer Person und damit um keine "echte" Person handelt.

Mit den dreidimensionalen Daten kann aber auch eine Überprüfung des Abstandes des Kopfes von der Kamera bzw. der Übersichtskamera erfolgen. Die erste Brennweite der Kamera und die zweite Brennweite der Übersichtskamera können dabei vorzugsweise gleich oder unterschiedlich sein. Durch den Einsatz unterschiedlicher Brennweiten oder mittels unterschiedlicher Schärfe-Einstellungen der Kamera können unterschiedliche Referenzbilder mit unterschiedlichen Bildaufnahmeszenarien zur Personenidentifikation erzeugt werden.

Es hat sich als vorteilhaft erwiesen, wenn der Spiegel zumindest teildurchlässig und derart angeordnet ist, dass das durch den Spiegel reflektierte Licht auf die Kamera und das durch den Spiegel transmittierte Licht auf die Übersichtskamera gelenkt ist. Der Spiegel kann als semitransparenter Spiegel oder alternativ auch als Strahlteiler gebildet sein. Ist der Spiegel als Strahlteiler gebildet, so ist es insbesondere vorteilhaft ist, wenn der Spiegel als 50/50 Strahlteiler gebildet ist. Alternativ kann der Strahlteiler auch Licht in einem bestimmten Wellenlängenbereich transmittieren und Licht eines anderen Wellenlängenbereichs reflektieren; oder die Strahlteilung erfolgt anhand der entsprechenden Polarisation des Lichtes. Durch eine Anordnung der Übersichtskamera auf der der Gehäusefront abgewandten Seite des teildurchlässigen Spiegels kann weiterhin ein kompakter Aufbau realisiert werden (aus der Sicht eines Benutzers ist dann die Übersichtskamera also hinter dem und auf Höhe des Spiegels angeordnet). Darüber hinaus sind die Justage und die Höheneinstellung des Gehäuses und/oder der Kamera inkl. der Übersichtskamera vereinfacht.

Eine alternative Ausführungsform sieht vor, dass die Übersichtskamera oberhalb, d.h. auf der der Kamera gegenüberliegenden Seite des Spiegels angeordnet ist (aus der Sicht eines Benutzers ist dann die Übersichtskamera also oberhalb des Spiegels angeordnet). Die Übersichtskamera ist in der Richtung der Gehäusefront und damit in die Richtung der Person weisend orientiert. Diese Anordnung der Übersichtskamera ist vorteilhaft, denn hierdurch lässt sich am Detektor der Übersichtskamera eine höhere Lichtintensität detektieren gegenüber einer Anordnung der Übersichtskamera hinter einem teildurchlässigen Spiegel. Die Qualität der von der Übersichtskamera erfassten Bilder ist dadurch erheblich verbessert.

Um eine homogene Beleuchtung des zu erfassenden Gesichts der Person zu gewährleisten und um insbesondere Reflexe zu verhindern, die die Qualität der Bilder negativ beeinflussen, hat es sich als vorteilhaft erwiesen, wenn an oder auf der Gehäusefront eine Beleuchtungseinheit angeordnet ist, die aus mehreren durch die Auswerte- und/oder Steuereinheit einzeln oder gemeinsam ansteuerbaren Beleuchtungselementen gebildet ist. Vorzugsweise sind die Beleuchtungselemente als LEDs gebildet. Die Beleuchtung bzw. Ausleuchtung des Gesichts der Person kann durch die einzelne Ansteuerung der Beleuchtungselemente sehr exakt erfolgen, so dass Reflexe oder Fehlabbildungen, Über- oder Unterbelichtung etc. verhindert werden.

In diesem Zusammenhang ist es auch von Vorteil, wenn die Beleuchtungseinheit mehrteilig gebildet ist, und dass zumindest ein Teil der Beleuchtungseinheit lateral zum Strahlengang auf einer ersten Seite der Gehäusefront und zumindest ein anderer Teil lateral zum Strahlengang auf einer zweiten Seite der Gehäusefront angeordnet ist. Neben der verbesserten homogenen Ausleuchtung der Szene und der Beleuchtung des Gesichts der Person lässt sich durch die laterale Anordnung und durch die einzelne Ansteuerbarkeit der Beleuchtungselemente ein Schattenwurf auf dem Gesicht der Person provozieren. Dazu wird ein Teil der Beleuchtungselemente aktiviert und ein anderer Teil abgeschaltet oder umgekehrt. Anhand des erzeugten oder nicht erzeugten Schattens im Gesicht lässt sich im Rahmen der "presentation attack detection" feststellen, ob eine reale oder "echte" Person aufgenommen wird oder ob sich nur ein Abbild einer Person vor dem Objektiv der Kamera befindet.

Alternativ oder ergänzend kann eine Nahinfrarot-Kamera (NIR-Kamera) vorgesehen sein zur Abstandsmessung und/oder zur "presentation attack detection". In einer alternativen Ausführungsform kann auch die Übersichtskamera selbst als eine NIR-Kamera gebildet sein. Anhand eines durch die NIR-Kamera aufgenommenen NIR-Bildes kann unterschieden werden, ob das Bild eine reale Person darstellt oder lediglich ein auf einem Wiedergabegerät (z.B. einem Smartphone oder einem Tablet) dargestelltes Abbild einer Person zeigt.

Außerdem ist es bevorzugt, wenn im Gehäuse eine optische Brillendetektionseinheit vorgesehen ist. Brillen erzeugen bei Abbildungen häufig Reflexe, die die Qualität der Abbildung verschlechtern.

Vorzugsweise umfasst die Brillendetektionseinheit eine UV-Lichtquelle zur Aussendung von Ultraviolettstrahlung in Richtung der Person und einen UV-Detektor zur Detektion von von der Person reflektierter bzw. gestreuter Ultraviolettstrahlung umfasst. In der Regel reflektieren (teilweise auch absorbieren) Brillengläser Licht im ultravioletten Bereich bis ca. 350 Nanometer (nm). Erst Licht mit größerer Wellenlänge und insbesondere sichtbares Licht wird von den Brillengläsern transmittiert. Diese Erkenntnis wird genutzt, um anhand der charakteristischen Remission des UV-Lichts von Brillengläsern festzustellen, ob die Person eine Brille trägt oder nicht. Wird eine Brille detektiert, so kann dann durch Anpassung der Beleuchtungseinheit die Entstehung von Reflexen verhindert werden. Alternativ kann z.B. über die Bedieneinheit auch ein grafischer oder akustischer Hinweis ausgegeben werden, der die Person veranlasst, die Brille für den Erstellungsprozess des Bildes oder für den Identifikationsprozess abzunehmen.

Die Brillendetektionseinheit kann alternativ oder ergänzend eine Time-of-flight-Kamera wie eine MS-Kinect®-Kamera umfassen.

Um eine zentrierte und vollständige Abbildung des Gesichts auch bei unterschiedlich großen Personen zu erzeugen, ist es in einer weiteren Ausführungsform vorgesehen, dass das Gehäuse und/oder die Kamera mit dem Spiegel höhenverstellbar sind. Dadurch lässt sich sicherstellen, dass das Gesicht zentriert abgebildet wird. Es ist es zur einfacheren Justage und zur Vermeidung von optischen Fehleinstellungen bevorzugt, wenn das Gehäuse beispielsweise an einer Stange oder Wand horizontal und vertikal verstellbar angebracht ist.

Nach einer weiteren Ausführungsform der Erfindung ist die Bedieneinheit als ein ein Display aufweisender Touchscreen ausgestaltet, auf dem das durch die Kamera erfasste Bild anzeigbar ist. Somit kann die Person oder der Benutzer das durch die Kamera zu erfassende Bild am Display bzw. am Touchscreen in Echtzeit betrachten, bevor die Aufzeichnung des Fotos oder des Passbildes erfolgt.

Erfindungsgemäß ist auf einem Display der Bedieneinheit bzw. auf dem Touchscreen ein Blickschutzfilter angeordnet. Blickschutzfilter haben den Vorteil, dass das Display des Touchscreens nur unter vorgebbaren Blickwinkeln bezüglich des Touchscreens möglich ist (z.B. unter Blickwinkeln von -30 Grad bis +30 Grad). Hierdurch wird die Person gezwungen, einen vorgegebenen Blickwinkel, eine vorgegebene Position und damit einen vorgegebenen Abstand zur Kamera einzunehmen. Auch durch den Einsatz eines Blickschutzfilters wird die für ein qualitativ hochwertiges Passbild bevorzugte optische Weglänge zwischen der Kamera und dem Gesicht der Person erzwungen.

Eine bevorzugte Ausgestaltung des Blickschutzfilters sieht den Einsatz einer oder mehrerer Schichten einer Mehrzahl von Prismenlinsen vor. Jede Prismenlinse ist ausgestaltet, das Licht einzelner Bildpunkte des Displays zu bündeln und gerichtet auszusenden. Nur wenn sich die Person an der für die Erfassung der biometrischen Merkmale und/oder des Gesichtsbilds gewünschten Position gegenüber und/oder im gewünschten Abstand von der Kamera befindet, kann sie das von den Prismenlinsen ausgesendete Licht sehen. In diesem Falle können die Prismenlinsen starr angeordnet sein. Alternativ oder ergänzend sind aber die Prismenlinsen beweglich, insbesondere gesondert, ansteuerbar, so dass jede Prismenlinse das Licht einzelner Bildpunkte des Displays bündelt und gezielt dem linken oder dem rechten Auge der Person zusendet. Dabei wird sich die Person im Display nur dann wiedererkennen oder nur dann etwas im Display sehen können, wenn sie sich auf der gewünschten Position gegenüber und/oder im gewünschten Abstand von der Kamera befindet. Um bei diesen beweglichen Prismenlinsen auswerten zu können, an welcher Stelle der Szene sich der Kopf und/oder die Augen der abzulichtenden Person befinden, hat es sich als vorteilhaft erwiesen, wenn eine Übersichtskamera vorhanden und derart ausgestaltet ist, die Kopf- und/oder die Augenposition der Person zu erfassen. Die Übersichtskamera übernimmt also eine Trackingfunktion und ermöglicht so das gerichtete Zusenden der Bildpunkte mittels der Prismenlinsen, was nur dann erfolgreich funktioniert, wenn sich die Person an der gewünschten Position gegenüber und/oder im gewünschten Abstand von der Kamera befindet. Befindet sich die Person nicht an der gewünschten Position oder nicht im gewünschten Abstand, so senden die Prismenlinsen kein Licht in Richtung der Augen der Person aus, womit diese nichts am Display erkennen kann.

Der Blickschutzfilter aus Prismenlinsen gewährleistet vorzugsweise, dass sich der Kopf der Person sowohl in horizontaler als auch vertikaler Richtung in der gewünschten Weise gegenüber der Kamera angeordnet ist, um die biometrischen Merkmale und/oder das Gesichtsbild zu erfassen.

Alternativ oder ergänzend ist zwischen dem Spiegel und der Person ein zweiter teildurchlässiger Spiegel angeordnet, der derart im oder am Gehäuse angeordnet ist, dass ein Teil des einfallenden Lichts parallel zum Strahlengang der Kamera in Richtung des Spiegels transmittiert wird und ein zweiter Teil des Lichts parallel zum Strahlengang der Kamera in Richtung der Person reflektiert wird. Auf diese Weise kann eine vertikale und horizontale Verstellung des Gehäuses erfolgen, indem überprüft wird, ob das Gesicht vollständig und zentriert im Spiegel erkennbar ist. Die Verstellung kann dabei durch die Person oder automatisiert durch die Vorrichtung selbst erfolgen.

Zur Festlegung des Mindestabstands hat es sich weiterhin als vorteilhaft erwiesen, wenn zwischen dem Gehäuse und der Bedieneinheit ein (zusätzlicher) Abstandshalter angeordnet ist zur Aufrechterhaltung eines Mindestabstands zwischen der Person und der Gehäusefront und damit der im Gehäuse angeordneten Kamera. Dieser Abstandshalter kann zugleich als eine Kabelführung oder als ein Kabelkanal für zwischen der Auswerte- und/oder Steuereinheit und der Kamera und/oder der Übersichtskamera und/oder der NIR-Kamera verlaufende Kommunikationsleitungen ausgestaltet sein.

Die das Verfahren betreffende Aufgabe wird durch ein Verfahren gemäß Anspruch 11 gelöst. Es umfasst insbesondere die folgenden Schritte:
A) Detektieren einer Berührung der Bedieneinheit durch eine Person oder automatisiertes Erkennen einer vor der Bedieneinheit befindlichen Person;
B) Erfassung eines oder mehrerer Übersichtsbilder mittels einer Übersichtskamera;
C) Zentrieren des Gesichts der Person anhand des einen oder der mehreren Übersichtsbilder durch Anpassen der vertikalen und/oder horizontalen Ausrichtung einer Kamera und/oder eines Gehäuses zur Zentrierung des Gesichts der Person;
D) Aufnahme mindestens eines Gesichtsbildes durch die Kamera; und
E) Erfassung der biometrischen Daten im Gesichtsbild, Qualitätsbewertung und Presentation attack detection mittels einer Auswerte- und/oder Steuereinheit.

Dieses automatisierte oder zumindest teilautomatisierte Verfahren kann Bilder zur Erfassung der biometrischen Merkmale mit hoher Qualität erzeugen und stellt zugleich sicher, dass eine reale Person abgebildet wird.

In diesem Zusammenhang ist es insbesondere vorteilhaft, wenn Schritt B) den folgenden zusätzlichen Schritt umfasst:
B1) Erkennung der Position des Gesichts auf dem Übersichtsbild vorzugsweise durch Randerkennung und/oder Farberkennung mittels der Auswerte- und/oder Steuereinheit;

Eine alternative Ausführungsform des Verfahrens sieht einen abschließenden Schritt F) vor, bei dem ein Kontrollübersichtsbild durch die Übersichtskamera erstellt wird, um die zentrierte Position des Gesichts nochmals zu überprüfen. Sollte das Gesicht auf der Aufnahme des Gesichtsbildes nicht zentriert sein, so wird ein weiteres Übersichtsbild erstellt. Die Positionseinstellung kann in einer alternativen Ausführungsform auch manuell erfolgen, bspw. indem dem Gehäuse ein semitransparenter Spiegel oder eine Anzeigeeinheit zugeordnet ist, mit deren Hilfe die Person die Position ihres Kopfes selbst prüfen kann.

Alternativ oder ergänzend ist es sinnvoll, wenn im Rahmen von Schritt B) eine Abstandsmessung durchgeführt wird, die die folgenden Schritte umfasst:
B31) Auswertung des Abstandes zwischen der Übersichtskamera und dem Gesicht der Person mittels einer Triangulation.

Hierzu können bspw. im Übersichtsbild mehrere Referenzpunkte (z.B. an einer Rückwand) mit bekanntem Abstand aufgenommen werden. Entspricht der gemessene Abstandswert des Gesichts der Person nicht einem vorgegebenen Mindestabstand, so erfolgt ein entsprechender Hinweis (z.B. akustisches oder grafischer Hinweis durch die Bedieneinheit). Der Erfassungsprozess wird gestoppt, unterbrochen und vorzugsweise neu gestartet.

Alternativ oder ergänzend kann in einem Schritt B32) die Abstandsmessung auch durch die Aufnahme eines NIR-Bildes des Gesichts einer Person mittels einer NIR-Kamera und daran anschließender Extraktion des Abstandes anhand des NIR-Bildes erfolgen.

Alternativ oder ergänzend kann in einem Schritt B33) auch eine Abstandsmessung durchgeführt werden, welche die folgenden Schritte umfasst: Extraktion einer dreidimensionalen Information und eines Abstandes zwischen der Kamera und dem Gesicht der Person durch einen Vergleich von im Übersichtsbild enthaltenen Abbildungseigenschaften mit im Gesichtsbild enthaltenen Abbildungseigenschaften durch die Auswerte- und/oder Steuereinheit.

Weiterhin ist es von Vorteil, wenn die Qualitätsbewertung oder eine Identifikation der Person mittels der Auswerte- und/oder Steuereinheit mindestens einen der folgenden Schritte umfasst:
E1) Positionsbestimmung der Pupillen im Auge durch Rand- und/oder Farberkennung im Gesichtsbild; und/oder
E2) Bestimmung der Kopfneigung der Person im Gesichtsbild; und/oder
E3) Detektion von Reflexen; und/oder
E4) Bewertung der Tiefenschärfe des Gesichtsbildes.

Dabei ist es insbesondere vorgesehen, dass die Auswerte- und/oder Steuereinheit die so erhaltenen Ist-Werte im Gesichtsbild mit in einer Datenbank der Auswerte- und/oder Steuereinheit hinterlegten Sollwerten vergleicht. Stimmen die Ist-Werte nicht mit den Soll-Werten überein, so erfolgt ein demensprechender Hinweis an die Person. Alternativ oder ergänzend wird ein neues Gesichtsbild durch die Kamera aufgenommen. Ziel ist es nämlich, eine Frontalaufnahme der Person ohne Reflexe und mit einem geraden Blick, das heißt in Richtung einer Öffnung des Gehäuses gerichteten Augen aufzunehmen.

Gemäß einer Ausführungsform umfasst die "presentation attack detection" die folgenden Schritte:
E5) Feststellung, ob ein dreidimensionales Objekt abgebildet wird, und/oder
E6) Feststellung, ob ein lebender Kopf abgebildet wird.

Die Feststellung, ob ein dreidimensionales Objekt abgebildet wird, kann dabei erfolgen über den Vergleich der Abbildungseigenschaften des durch die Kamera erstellten Gesichtsbildes mit den Abbildungseigenschaften des durch die Übersichtskamera erstellten Übersichtsbildes. Alternativ oder ergänzend können auch Teile einer Beleuchtungseinheit aus- bzw. angeschaltet werden, so dass eine Schattenbildung auf dem Gesicht der Person provoziert und überprüft werden kann. Die Feststellung, dass es sich bei dem dreidimensionalen Objekt um einen lebenden Kopf handelt, kann dabei erfolgen, indem eine Mehrzahl von Gesichtsbildern und/oder von Übersichtsbildern und/oder von NIR-Bildern erstellt wird. Anhand der Mehrzahl oder der Serie an Abbildungen lässt sich nämlich prüfen, ob unterschiedliche Gesichtsausdrücke und/oder unterschiedliche Augenpositionen vorliegen.

Außerdem kann Schritt B) in einer alternativen Ausführungsform der folgende Schritt folgen: - Erkennen, ob die abzulichtende Person eine Brille trägt mittels einer Brillendetektionseinheit.

Gemäß einer weiteren Ausführungsform ist es von Vorteil, wenn nach Schritt A) auch eine Brillendetektion durchgeführt wird, die die folgenden Schritte umfasst:
A1) Beleuchtung des Gesichts der Person mit einer UV-Lampe; und
A2) Detektion der Remission mittels eines UV-Detektors in einem Wellenlängenbereich zwischen 330 Nanometern bis 380 Nanometern.

Es wird vom Detektor in diesem UV-Bereich eine charakteristische Remission detektiert, wenn eine Brille getragen wird. Diese charakteristische Remission lässt sich nicht detektieren, wenn die Person keine Brille trägt. Alternativ ist es auch möglich, anstelle der Remission, die Absorption und/oder die Transmission des Brillenglases zu messen, um zu überprüfen, ob die Person eine Brille trägt.

Der Einsatz anderer Verfahren zur Brillendetektion ist möglich.

Im Folgenden wird die Erfindung an in der Zeichnung dargestellten Ausführungsbeispielen näher erläutert; es zeigen:
- Fig. 1: eine Vorrichtung zur Erfassung biometrischer Merkmale eines Gesichts einer Person anhand einer schematischen Seitenansicht;
- Fig. 2: eine Frontansicht der Vorrichtung nach Fig. 1 ohne die Bedieneinheit;
- Fig. 3: eine zweite Vorrichtung zur Erfassung biometrischer Merkmale eines Gesichts einer Person anhand einer schematischen Seitenansicht;
- Fig. 4: eine Frontansicht der Vorrichtung nach Fig. 3 ohne die Bedieneinheit;
- Fig. 5: eine dritte Vorrichtung zur Erfassung biometrischer Merkmale eines Gesichts einer Person anhand einer schematischen Seitenansicht;
- Fig. 6: eine weitere Vorrichtung zur Erfassung biometrischer Merkmale eines Gesichts einer Person anhand einer schematischen Seitenansicht; und
- Fig. 7: eine schematische Übersicht über die mit der Auswerte- und/oder Steuereinheit in Verbindung stehenden Kommunikationskanäle.

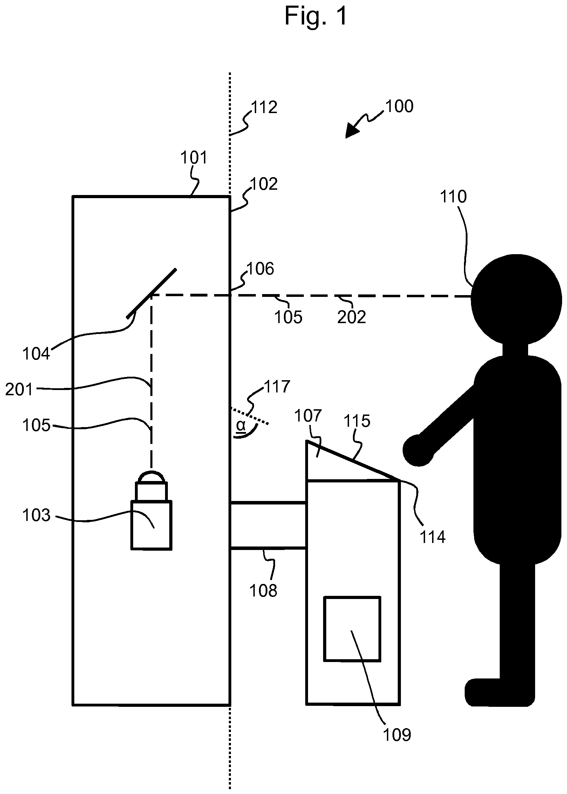

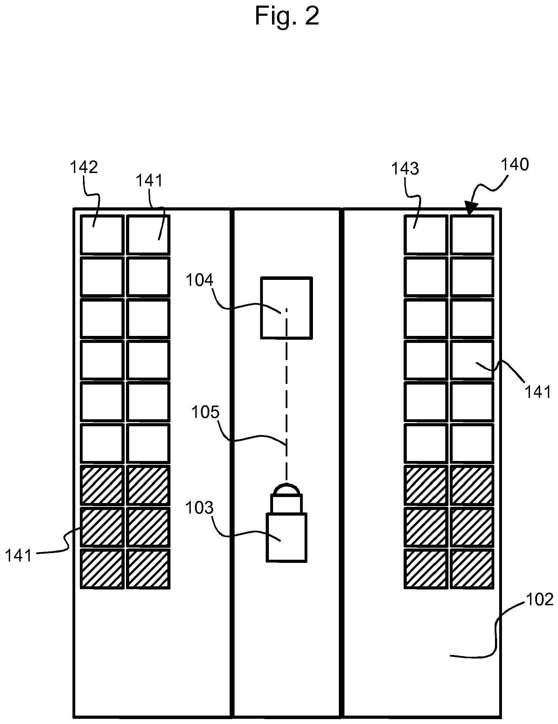

Fig. 1 und Fig. 2 zeigen exemplarisch eine Vorrichtung 100 zur Erfassung biometrischer Merkmale eines Gesichts 110 einer Person. Die Vorrichtung 100 besitzt ein Gehäuse 101, welches eine der Person zugewandte Gehäusefront 102 aufweist. In dem Gehäuse 101 ist eine Kamera 103 zur Erfassung der biometrischen Merkmale des Gesichts 110 der Person angeordnet, die auf einen Spiegel 104 gerichtet ist. Die Blickrichtung der Kamera 103 ist damit also im Wesentlichen parallel zu einer durch die Gehäusefront 102 definierten Ebene 112 orientiert. Der ebenfalls im Gehäuse 101 angeordnete Spiegel 104 dient der Faltung eines zwischen dem Gesicht 110 der Person und der Kamera 103 verlaufenden Strahlengangs 105. Hierzu lenkt der Spiegel 104 das durch eine Gehäuseöffnung 106 bzw. durch einen transparenten Abschnitt in der Gehäusefront 102 einfallende Licht auf die Kamera 103. Er ist im gezeigten Ausführungsbeispiel im Wesentlichen um 45 Grad gegenüber der durch die Gehäusefront 102 vorgegebene Ebene 112 geneigt angeordnet.

Weiterhin ist eine Bedieneinheit 107 vorgesehen, die zwischen der Gehäusefront 102 und der Person bzw. des abzulichtenden Bereichs angeordnet ist. Die Bedieneinheit 107 ist geneigt bezüglich der durch die Gehäusefront 102 vorgegebenen Ebene 112 angeordnet. Die durch die Bedieneinheit 107 vorgegebene Ebene 117 ist mit anderen Worten unter einem Neigungswinkel α (alpha) bezüglich der Ebene 112 der Gehäusefront 102 angeordnet. Eine "Neigung" der Bedieneinheit 107 liegt insbesondere dann vor, wenn sowohl das Skalarprodukt als auch der Betrag des Kreuzprodukts des Normalenvektors der Ebene 112 der Gehäusefront 102 (Gehäusefrontnormalenvektor) und des Normalenvektors der Ebene 117 der Bedieneinheit 107 (Bedieneinheitsnormalenvektor) ungleich Null sind. Durch die geneigte Anordnung der Bedieneinheit 107 wird eine vorgegebene Länge des Strahlengangs 105 zwischen dem Gesicht 110 der Person bzw. des abzulichtenden Bereichs und der Kamera 103 erzielt. Diese optische Weglänge beträgt im vorliegenden Beispiel im Wesentlichen 150 Zentimeter. Die für ein möglichst optimales Gesichtsbild optische Weglänge wird vorliegend zusätzlich durch einen zwischen der Gehäusefront 102 und der Bedieneinheit 107 angeordneten Abstandshalter 108 begünstigt.

Der Abstand 201 zwischen der Kamera 103 und dem Spiegel 104 sowie der Abstand 202 zwischen dem Spiegel 104 und dem Gesicht 110 sind dabei konstant zu halten. Deshalb ist wird bei einer vertikalen, und damit parallel zur Ebene 112 der Gehäusefront 102 orientierten Verstellung des Spiegels 104 zugleich die Kamera 103 vertikal um denselben Betrag verstellt. Hierzu kann eine vertikale Hubeinrichtung zur Verstellung der Kamera 103 und des Spiegels 104 vorgesehen sein. In einer anderen Ausführungsform kann auch eine Hubeinrichtung zur vertikalen Verstellung des gesamten Gehäuses 101 vorgesehen sein, um den Spiegel 104 auf die Höhe des Gesichts 110 der zu erfassenden Person zu verstellen.

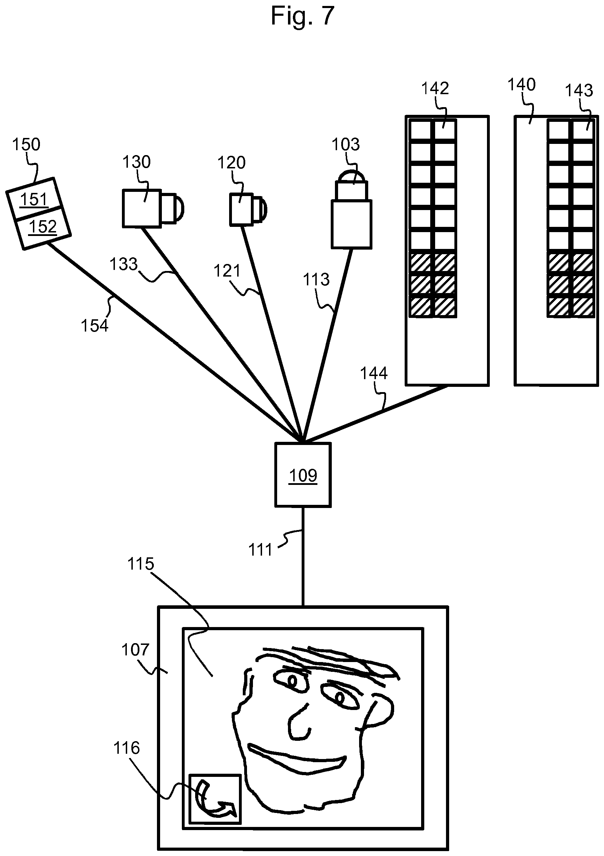

Die Bedieneinheit 107 ist beispielhaft als ein Touchscreen bzw. als ein Touchpanel ausgestaltet und mit einer Auswerte- und/oder Steuereinheit 109 in Form eines Computers verbunden. Alternativ weist die Bedieneinheit 107 auch einen eigenständigen Prozessor (bspw. einen Mikroprozessor) auf, vorzugsweise mit einem in dessen Speicher abgelegten und ausführbaren Echtzeitbetriebssystem (RTOS=real-time operating system) und einer oder mehrerer Anwendungen (Applications) zur Gesichtsbilderfassung. Zwischen der Bedieneinheit 107 und dem Computer ist eine Kommunikationsverbindung 111 wirksam (Fig. 7), welche drahtgebunden oder drahtlos (bspw. Bluetooth, WLAN, NFC, etc.) gebildet sein kann. Die Auswerte- und/oder Steuereinheit 109 steht weiterhin in einer drahtgebundenen oder drahtlosen Kommunikationsverbindung 113 mit der Kamera 103. Somit können die von der Kamera 103 erfassten Bilder, vorzugsweise in Echtzeit, mit Hilfe des Computers auf dem Display 115 der Bedieneinheit 107, mithin auf dem Touchscreen ausgegeben werden.

Wie sich insbesondere Fig. 2 entnehmen lässt, ist an der Gehäusefront 102 eine Beleuchtungseinheit 140 angeordnet. Diese ist aus mehreren durch den Computer einzeln ansteuerbaren Beleuchtungselementen 141 gebildet. In den gezeigten Ausführungsbeispielen weist die Beleuchtungseinheit zwei Teile auf. Ein Teil bzw. ein erstes Array 142 aus Beleuchtungselementen 141 ist an der Gehäusefront 102 lateral zum Strahlengang 105 der Kamera 103 auf der linken Seite angeordnet. Ein anderer Teil bzw. ein zweites Array 143 aus Beleuchtungselementen 141 ist an der Gehäusefront 102 lateral zum Strahlengang 105 der Kamera 103 auf der rechten Seite angeordnet. Bei den beispielhaft gezeigten Vorrichtungen 100 sind beide Arrays 142, 143 aus Beleuchtungselementen 141 zweispaltig und neunzeilig gebildet. Eine andere Anzahl an Spalten oder Zeilen ist möglich. Wie sich aus Fig. 2 entnehmen lässt, sind nicht alle Beleuchtungselemente 141 eingeschaltet. Die ausgeschalteten Beleuchtungselemente 141 sind schraffiert dargestellt. Die Beleuchtungselemente 141 lassen sich in Abhängigkeit von der Größe der Person oder in Abhängigkeit von der horizontal einstellbaren Lage des Spiegels 104 und damit der Kamera 103 ein- bzw. ausschalten. Die Steuerung erfolgt mittels der Auswerte- und/oder Steuereinheit 109. Sind die beiden seitlichen Teile der Beleuchtungseinheit 140 eingeschaltet, so wird das Gesicht 110 der Person frontal beleuchtet und ein Schattenwurf wird unterbunden. Durch die individuelle Ansteuerbarkeit der Beleuchtungselemente lassen sich die Empfehlungen der ISO 19794-5 realisieren. Außerdem lassen sich die Beleuchtungselemente 141 für eine "presentation attack detection" nutzen. Dabei ist eine Seite der Beleuchtungseinheit 140 einschaltbar, während die andere Seite der Beleuchtungseinheit 140 ausgeschaltet ist oder wird. Dadurch lassen sich Schattenbilder auf dem Gesicht 110 provozieren, so dass ermittelt werden kann, ob es sich bei der Person tatsächlich um ein dreidimensionales "Objekt" handelt.

Die Vorrichtung 100 kann als eine Kabine, bspw. in Form eines Selbstbedienungskiosks, ausgestaltet sein, die zumindest eine Rückwand umfasst. Um qualitativ hochwertige Gesichtsbilder zur Verwendung in einem Pass erzeugen zu können, ist die der Gehäusefront 102 zugewandte Oberfläche der Rückwand deshalb einfarbig in einer neutralen Farbe gehalten. Alternativ kann die Vorrichtung 100 auch als ein Terminal zur Erfassung von biometrischen Daten einer Person ausgestaltet sein. Dieses Terminal kann eine Sendeeinheit und eine Empfangseinheit umfassen. Das erfasste Gesichtsbild lässt sich mittels der Sendeeinheit zu einer Behörde senden, wo ein Prüfmodul die Echtheit der biometrischen Daten im Gesichtsbild überprüft und wo ein Komparator die Daten mit in einer Datenbank abgelegten Werten auf Übereinstimmung abgleicht. Das Prüf- und/oder Komparatorergebnis kann dann an die Empfangseinheit des Terminals zurückgesendet werden. Somit lässt sich die Vorrichtung 100 nicht nur zur Erzeugung hochwertiger Passbilder sondern auch zum Identitätsabgleich nutzen.

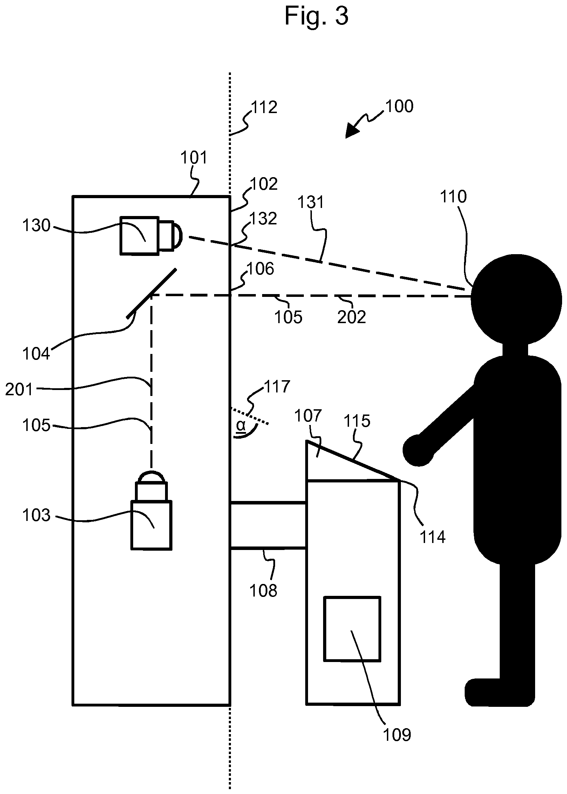

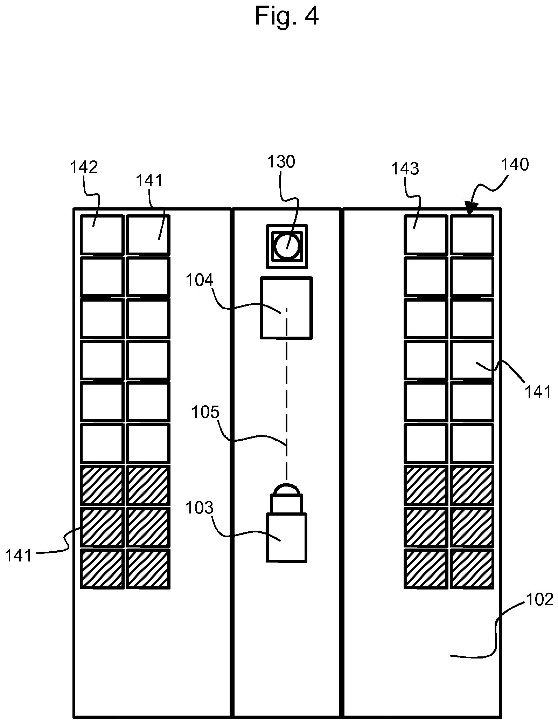

Die Vorrichtung 100 nach Fig. 3 und Fig. 4 unterscheidet sich von derjenigen nach Fig. 1 und Fig. 2 dadurch, dass außerdem eine Übersichtskamera 130 zur Aufzeichnung eines oder mehrerer Übersichtsbilder vorgesehen ist, welche eine zweite Brennweite aufweist. Die Länge eines zweiten Strahlengangs 131, d.h. einer zweiten optischen Weglänge zwischen der Übersichtskamera 130 und dem Gesicht 100 der Person ist dabei kleiner als die Länge des Strahlengangs 105 zwischen der Kamera 103 und dem Gesicht 110 der Person. Das Übersichtsbild lässt sich durch eine zweite Gehäuseöffnung 132 bzw. in einem zweiten transparenten Abschnitt in der Gehäusefront 102 aufnehmen. Hierzu ist die Übersichtskamera 130 im Gehäuse 101 auf der der Kamera 103 abgewandten Seite, mithin oberhalb des Spiegels 104 angeordnet. Damit lässt sich das Gehäuse 101 schlank halten.

Anhand des mit der Übersichtskamera 130 erstellten Übersichtsbildes kann in der Auswerte- und/oder Steuereinheit 109 die Position und die Lage des Gesichts 110 der Person bestimmt werden. Hierzu steht die Übersichtskamera 130 in einer drahtgebundenen oder drahtlosen Kommunikationsverbindung 133 mit der Auswerte- und/oder Steuereinheit 109. Anhand des Übersichtsbildes kann die Höhenlage des Spiegels 104 angepasst werden, um den "Blick" der Kamera 103 - über den Spiegel 104 - auf das Gesicht 110 der Person zu richten. Vorzugsweise werden anhand des Übersichtsbildes in der Auswerte- und/oder Steuereinheit 109 die Konturen des Gesichts 110 durch eine Randerkennung und/oder eine Farberkennung ermittelt. Nur wenn das Gesicht 110 vollständig abgebildet und zentriert ist, wird der nächste Schritt der Aufnahme eines Gesichtsbilds durch die Kamera 103 durchgeführt.

Mit Hilfe des Übersichtsbilds lässt sich aber auch der Abstand des Gesichts 110 der Person von der Übersichtskamera 130 und damit auch von der Kamera 103 bestimmen. Beispielsweise kann hierzu eine Triangulation genutzt werden, denn wenn mindestens zwei Referenzpunkte durch die Übersichtskamera 130 aufgenommen werden, deren jeweiliger Abstand zur Übersichtskamera 130 bekannt ist, so lässt sich daraus mittels Triangulation der Abstand des Gesichts 110 zur Übersichtskamera 130 ableiten. Aber auch eine als eine Time-of-Flight-Kamera gebildete Übersichtskamera 130 kann zur Abstandsbestimmung eingesetzt werden. Insgesamt wird dadurch gewährleistet, dass das Gesicht 110 der Person nicht zu nahe am Spiegel 104 positioniert ist, was zu einem verfälschten Gesichtsbild führen könnte.

Die Abstandsmessung kann zur Kontrolle auch nach der Aufnahme des Gesichtsbildes 110 durch die Kamera 103 erfolgen. Hierbei kann ausgenutzt werden, dass aufgrund der unterschiedlichen Längen der Strahlengänge 105, 131 bzw. der optischen Weglänge zwischen dem Gesicht 110 und der Übersichtskamera 130 und dem Gesicht 110 und der Kamera 103 die Abbildungseigenschaften der jeweiligen Bilder unterschiedlich sind, so dass anhand der unterschiedlichen Abbildungseigenschaften eine Tiefeninformation generiert werden kann.

Zudem lässt sich feststellen, ob ein lebender Kopf abgebildet wird. Dies kann erreicht werden, indem mehrere Übersichtsbilder in Serie und/oder mehrere Gesichtsbilder in Serie aufgenommen werden, um zu überprüfen, ob unterschiedliche Gesichtsausdrücke und/oder unterschiedliche Augenpositionen abgebildet wurden. Dies erlaubt den Rückschluss auf einen lebenden Kopf.

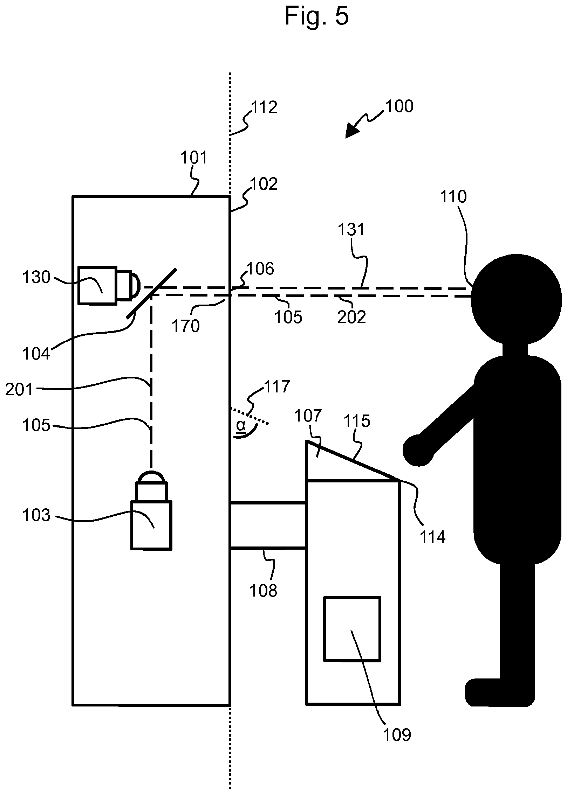

In Fig. 5 ist eine Vorrichtung 100 zur Erfassung biometrischer Merkmale eines Gesichts 110 einer Person gezeigt, die sich von der Vorrichtung nach Fig. 3 und Fig. 4 dadurch unterscheidet, dass die Übersichtskamera 130 nicht oberhalb sondern auf der der Gehäusefront 102 abgewandten Seite des Spiegels 104, bzw. hinter diesem angeordnet ist. Der Spiegel 104 ist aus diesem Grund zumindest teildurchlässig oder semitransparent gebildet und derart angeordnet, dass das durch den Spiegel 104 reflektierte Licht auf die Kamera 103 und das durch den Spiegel transmittierte Licht auf die Übersichtskamera 130 gelenkt ist. Eine solche Anordnung der Übersichtskamera 130 führt zu einer sehr kompakten Vorrichtung 100.

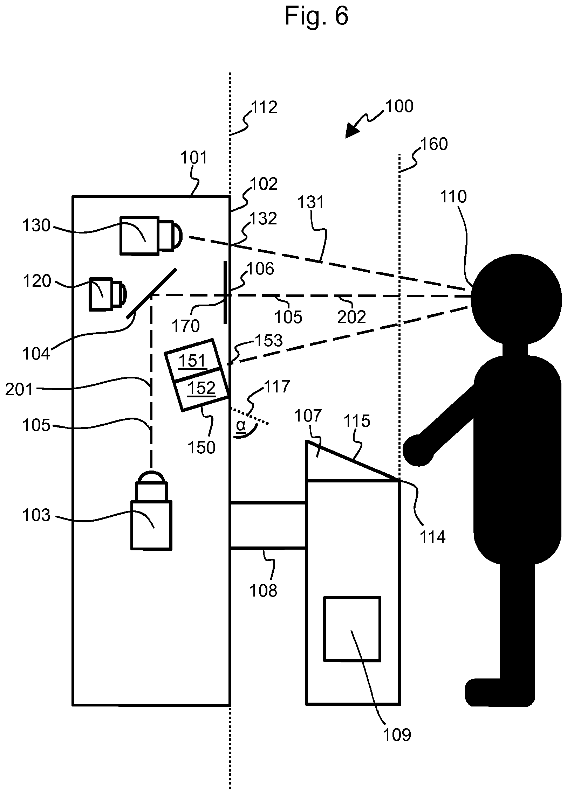

In Fig. 6 ist eine Vorrichtung 100 zur Erfassung biometrischer Merkmale eines Gesichts 110 einer Person gezeigt, die sich von der Vorrichtung 100 nach Fig. 3 und Fig. 4 dadurch unterscheidet, dass zusätzlich eine Nahinfrarot-Kamera vorgesehen ist. Die NIR-Kamera 120 kann auch bei der Vorrichtung 100 nach Fig. 1 und Fig. 5 eingesetzt werden.

In Fig. 6 ist die NIR-Kamera 100 auf die Person gerichtet. Sie ist auf der der Gehäusefront 102 abgewandten Seite des Spiegels 104 angeordnet. Auch die NIR-Kamera 120 kann für eine Abstandsmessung genutzt werden durch Auswertung eines durch die NIR-Kamera 120 erzeugten NIR-Bildes. Liegt der im NIR-Bild gemessene Abstand des Gesichts 110 innerhalb eines Soll-Bereichs, so nimmt die Kamera 103 als nächstes ein Gesichtsbild der Person auf; andernfalls wird ein Hinweis an die Person ausgegeben, um deren Lage und/oder deren Position zu ändern. Dieser Hinweis kann beispielsweise über eine am Display 115 vorgesehene Hinweisausgabe 116 erfolgen (Fig. 7). Die Abstandsmessung wird so lange wiederholt, bis Ist- und Sollwert übereinstimmen.

Alternativ oder ergänzend kann mittels des NIR-Bildes darauf rückgeschlossen werden, ob es sich lediglich ein zweidimensionales Abbild einer Person auf einem Wiedergabegerät handelt (zum Beispiel auf einem Tablet oder auf einem Smartphone). Denn über das NIR-Bild kann auch die Körperwärme oder die Blutzirkulation ermittelt werden. Somit wird die NIR-Kamera 120 zu einem hilfreichen Werkzeug für die "presentation attack detection".

Die Vorrichtung nach Fig. 6 weist ferner eine schematisch dargestellte Brillendetektionseinheit 150 auf, die einen UV-Detektor 151 und eine UV-Lichtquelle 152 umfasst. Die Lichtquelle und der Detektor sind hinter einem UV-transparenten Bereich 153 der Gehäusefront 101 oder einer weiteren Öffnung angeordnet und auf die Person gerichtet. Diese Brillendetektionseinheit 150 kann auch bei den Vorrichtungen 100 nach Fig. 1, Fig. 3 und Fig. 5 eingesetzt werden. Mit der Brillendetektionseinheit 150 kann zu Beginn des Erfassungs- oder Identifikationsprozesses festgestellt werden, ob die Person eine Brille trägt oder nicht. In Abhängigkeit des Ergebnisses lässt sich die Beleuchtung anpassen oder die Person bekommt automatisiert einen Hinweis, den Kopf leicht zu neigen, um Reflexionen zu verhindern, oder die Brille abzunehmen. Die Brillendetektion erfolgt dabei, indem die UV-Remission des Gesichts 110 gemessen wird. Die Remission im UV-Bereich ist dabei charakteristisch für Brillengläser und unterscheidet sich signifikant gegenüber der Remission eines Gesichts 110 ohne Brillengläser.

Die Vorrichtung 100 nach Fig. 6 weist ferner einen schematisch angedeuteten Infrarot-Fächer oder Infrarotvorhang auf. Dieser IR-Fächer 160 erstreckt sich vorzugsweise von einer der Gehäusefront 101 abgewandten Kante 114 der Bedieneinheit 107 und ist vorzugsweise im Wesentlichen parallel zur Gehäusefront 101 ausgerichtet. Dadurch wird vermieden, dass sich beispielsweise eine kurzsichtige Person nach vorne beugt und somit den Strahlengang 105 zur Kamera 103 verkürzt. Denn vorzugsweise sieht die Person oder der Benutzer eine Vorschau des zu erfassenden Bildes im Display 115 der Bedieneinheit 107. Die von der Kamera 103 erfassten Bilddaten werden an die Auswerte- und/oder Steuereinheit 109 übermittelt und, vorzugsweise in Echtzeit auf dem Display 115 der Bedieneinheit 107 ausgegeben. Der IR-Fächer 160 kann auch bei einer Vorrichtung 100 nach Fig. 1, nach Fig. 3 oder nach Fig. 5 Einsatz finden.

Optional weist die Vorrichtung 100 nach Fig. 6 zusätzlich einen zwischen dem Spiegel 104 und der Person angeordneten zweiten teildurchlässigen Spiegel 170 auf, der derart an der Gehäusefront 101 angeordnet ist, dass ein Teil des einfallenden Lichts parallel zum Strahlengang 105 der Kamera 103 in Richtung des Spiegels 104 transmittiert wird und ein zweiter Teil des Lichts parallel zum Strahlengang 105 der Kamera 103 in Richtung der Person reflektiert wird. Hierdurch kann die Person mittels des zweiten Spiegels 170 erkennen, ob ihr Kopf vollständig im Spiegelbild abgebildet und zentriert ist. Die Person kann dann manuell die horizontale und/oder die vertikale Einstellung des Gehäuses 101 verändern. Alternativ kann die Justage der Vorrichtung 100 relativ zum Gesicht 110 der Person auch automatisch erfolgen. Auch der Einsatz eines zweiten teildurchlässigen Spiegels 170 ist bei den Vorrichtungen 100 nach Fig. 1, nach Fig. 3 oder nach Fig. 5 möglich.

Wie Fig. 7 zeigt, kann die Auswerte- und/oder Steuereinheit 109 in Form eines Computers mit jedem einzelnen elektronischen Bestandteil der Vorrichtungen 100 in einer Kommunikationsverbindung 111, 113, 121, 133, 144, 154 stehen. So sind in dem gezeigten Beispiel die Kamera 103, die Übersichtskamera 130, die NIR-Kamera 120, die Beleuchtungseinheit 140 und das Display 115 der Bedieneinheit 107 drahtgebunden oder drahtlos mit dem Computer verbunden.

### Bezugszeichenliste

- 100: Vorrichtung
- 101: Gehäuse
- 102: Gehäusefront
- 103: Kamera
- 104: Spiegel
- 105: Strahlengang
- 106: Gehäuseöffnung
- 107: Bedieneinheit
- 108: Abstandshalter
- 109: Auswerte- und/oder Steuereinheit
- 110: Gesicht
- 111: Kommunikationsverbindung (Bedieneinheit)
- 112: Ebene
- 113: Kommunikationsverbindung (Kamera)
- 114: Kante
- 115: Display
- 116: Hinweisausgabe
- 117: Ebene
- 120: NIR-Kamera
- 121: Kommunikationsverbindung (NIR-Kamera)
- 130: Übersichtskamera
- 131: zweiter Strahlengang
- 132: zweite Gehäuseöffnung
- 133: Kommunikationsverbindung (Übersichtskamera)
- 140: Beleuchtungseinheit
- 141: Beleuchtungselement
- 142: erstes Array
- 143: zweites Array
- 144: Kommunikationsverbindung (Beleuchtungseinheit)
- 150: Brillendetektionseinheit
- 151: UV-Detektor
- 152: UV-Lichtquelle
- 153: UV-transparenter Bereich
- 154: Kommunikationsverbindung (Brillendetektionseinheit)
- 160: IR-Fächer
- 170: zweiter Spiegel
- 201: Abstand
- 202: Abstand
- α: Neigungswinkel

## Patentansprüche

1. Vorrichtung (100) zur Erfassung biometrischer Merkmale eines Gesichts (110) einer Person, mit einem Gehäuse (101), welches eine der Person zugewandte Gehäusefront (102) aufweist und in welchem eine eine erste Brennweite aufweisende Kamera (103) zur Erfassung der biometrischen Merkmale und ein Spiegel (104) zur Faltung eines zwischen dem Gesicht (110) der Person und der Kamera (103) verlaufenden Strahlengangs (105) angeordnet sind, sowie mit einer mit einer Auswerte- und/oder Steuereinheit (109) drahtlos oder drahtgebunden in Kommunikationsverbindung (111) stehenden Bedieneinheit (107), welche ein Display (115) umfasst und welche zwischen der Gehäusefront (102) und der Person angeordnet ist, wobei zur Erzeugung einer vorgegebenen Länge des Strahlengangs (105) die Bedieneinheit (107) geneigt unter einem Neigungswinkel (a) bezüglich der Gehäusefront (102) angeordnet ist, **dadurch gekennzeichnet, dass** auf dem Display (115) der Bedieneinheit (167) ein Blickschutzfilter angeordnet ist, derart, dass das Display (115) nur unter vorgegebenen Blickwinkeln sichtbar ist.

2. Vorrichtung (100) nach Anspruch 1, **dadurch gekennzeichnet, dass** eine Übersichtskamera (130) mit einer zweiten Brennweite vorgesehen ist, wobei die Länge eines zweiten Strahlengangs (131) zwischen der Übersichtskamera (130) und dem Gesicht (110) der Person kleiner ist als die Länge des Strahlengangs (105) zwischen der Kamera (103) und dem Gesicht (110) der Person.

3. Vorrichtung (100) nach Anspruch 2, **dadurch gekennzeichnet, dass** der Spiegel (104) zumindest teildurchlässig und derart angeordnet ist, dass das durch den Spiegel (104) reflektierte Licht auf die Kamera (103) und das durch den Spiegel (104) transmittierte Licht auf die Übersichtskamera (130) gelenkt ist.

4. Vorrichtung (100) nach einem der Ansprüche 1 bis 3, **dadurch gekennzeichnet, dass** an der Gehäusefront (102) eine Beleuchtungseinheit (140) angeordnet ist, die aus mehreren durch die Auswerte- und/oder Steuereinheit (109) einzeln oder gemeinsam ansteuerbaren Beleuchtungselementen (141) gebildet ist.

5. Vorrichtung (100) nach Anspruch 4, **dadurch gekennzeichnet, dass** die Beleuchtungseinheit (140) mehrteilig gebildet ist, und dass zumindest ein Teil der Beleuchtungseinheit (140) lateral zum Strahlengang (105) auf einer ersten Seite der Gehäusefront (102) und zumindest ein anderer Teil lateral zum Strahlengang (105) auf einer zweiten Seite der Gehäusefront (102) angeordnet ist.

6. Vorrichtung (100) nach einem der Ansprüche 1 bis 5, **dadurch gekennzeichnet, dass** zur Abstandsmessung und/oder zur presentation attack detection eine Nahinfrarot-Kamera vorgesehen ist.

7. Vorrichtung (100) nach einem der Ansprüche 1 bis 6, **dadurch gekennzeichnet, dass** im Gehäuse (101) eine optische Brillendetektionseinheit (150) vorgesehen ist.

8. Vorrichtung (100) nach Anspruch 7, **dadurch gekennzeichnet, dass** die Brillendetektionseinheit (150) eine UV-Lichtquelle (152) und einen UV-Detektor (151) umfasst.

9. Vorrichtung (100) nach einem der Ansprüche 1 bis 8, **dadurch gekennzeichnet, dass** die Bedieneinheit (107) als ein ein Display (115) aufweisender Touchscreen ausgestaltet ist, auf dem das durch die Kamera (103) erfasste Bild ausgebbar ist.

10. Vorrichtung (100) nach einem der Ansprüche 1 bis 9, **dadurch gekennzeichnet, dass** zwischen dem Spiegel (104) und der Person ein zweiter teildurchlässiger Spiegel (170) angeordnet ist, der derart im oder am Gehäuse (101) angeordnet ist, dass ein Teil des einfallenden Lichts parallel zum Strahlengang (105) der Kamera (103) in Richtung des Spiegels (104) transmittiert wird und ein zweiter Teil des Lichts parallel zum Strahlengang (105) der Kamera (103) in Richtung der Person reflektiert wird.

11. Verfahren zur Erfassung biometrischer Merkmale eines Gesichts (110) einer Person mit einer Vorrichtung (100) nach einem der Ansprüche 2 bis 10, dieses die folgenden Schritte umfassend:
A) Detektieren einer Berührung der Bedieneinheit (107) durch eine Person oder automatisiertes Erkennen einer vor der Bedieneinheit (107) befindlichen Person;
B) Erfassung eines oder mehrerer Übersichtsbilder mittels einer Übersichtskamera (130);
C) Zentrieren des Gesichts (110) der Person anhand des einen oder der mehreren Übersichtsbilder durch Anpassen der vertikalen und/oder horizontalen Ausrichtung einer Kamera (103) und/oder eines Gehäuses (101) ;
D) Aufnahme mindestens eines Gesichtsbildes durch die Kamera (103); und
E) Erfassung der biometrischen Daten im Gesichtsbild, Qualitätsbewertung und Presentation attack detection mittels einer Auswerte- und/oder Steuereinheit (109).

12. Verfahren nach Anspruch 11, **dadurch gekennzeichnet, dass** Schritt B) den folgenden weiteren Schritt umfasst:
- Erkennung der Position des Gesichts auf dem Übersichtsbild vorzugsweise durch Randerkennung und/oder Farberkennung mittels der Auswerte- und/oder Steuereinheit.

13. Verfahren nach Anspruch 11 oder 12, **dadurch gekennzeichnet, dass** Schritt B) den folgenden weiteren Schritt umfasst:
- Auswertung des Abstandes zwischen der Übersichtskamera und dem Gesicht der Person mittels einer Triangulation.

14. Verfahren nach einem der Ansprüche 11 bis 13, **dadurch gekennzeichnet, dass** Schritt E) zumindest einen der folgenden weiteren Schritte umfasst:
- Positionsbestimmung der Pupillen im Auge durch Rand- und/oder Farberkennung im Gesichtsbild; und/oder
- Bestimmung der Kopfneigung der Person im Gesichtsbild; und/oder
- Detektion von Reflexen; und/oder
- Bewertung der Tiefenschärfe des Gesichtsbildes.

15. Verfahren nach einem der Ansprüche 11 bis 14, **dadurch gekennzeichnet, dass** nach Schritt A) der folgende weitere Schritt folgt:
- Erkennen, ob die abzulichtende Person eine Brille trägt mittels einer Brillendetektionseinheit (150).

## Claims

1. Device (100) for recording biometric features of a face (110) of a person, having a housing (101) which has a housing front (102) facing the person and in which a camera (103) having a first focal length for recording the biometric features and a mirror (104) for folding a beam path (105) running between the face (110) of the person and the camera (103) are arranged, and having an operating unit (107) which is connected to an evaluation and/or control unit (109) in a wireless or wired communication link (111), which comprises a display (115) and which is arranged between the housing front (102) and the person, the operating unit (107) being arranged inclined at an angle of inclination (a) with respect to the housing front (102) in order to produce a predetermined length of the beam path (105), **characterized in that** a viewing protection filter is arranged on the display (115) of the operating unit (167) in such a way that the display (115) is visible only at predetermined viewing angles.

2. Device (100) according to claim 1, **characterized in that** an overview camera (130) with a second focal length is provided, wherein the length of a second beam path (131) between the overview camera (130) and the face (110) of the person is smaller than the length of the beam path (105) between the camera (103) and the face (110) of the person.

3. Device (100) according to claim 2, **characterized in that** the mirror (104) is at least partially transparent and arranged in such a way that the light reflected by the mirror (104) is directed onto the camera (103) and the light transmitted by the mirror (104) is directed onto the overview camera (130).

4. Device (100) according to any of claims 1 to 3, **characterized in that** an illumination unit (140) is arranged on the front of the housing (102), which illumination unit (140) is formed from a plurality of illumination elements (141) which can be actuated individually or jointly by the evaluation and/or control unit (109).

5. Device (100) according to claim 4, **characterized in that** the illumination unit (140) is formed in multiple parts, and **in that** at least one part of the illumination unit (140) is arranged laterally with respect to the beam path (105) on a first side of the housing front (102) and at least another part is arranged laterally with respect to the beam path (105) on a second side of the housing front (102).

6. Device (100) according to any of claims 1 to 5, **characterized in that** a near-infrared camera is provided for distance measurement and/or for presentation attack detection.

7. Device (100) according to any of claims 1 to 6, **characterized in that** an spectacle detection unit (150) is provided in the housing (101).

8. Device (100) according to claim 7, **characterized in that** the spectacle detection unit (150) comprises a UV light source (152) and a UV detector (151).

9. Device (100) according to any of claims 1 to 8, **characterized in that** the operating unit (107) is designed as a touch screen having a display (115), on which the image captured by the camera (103) can be output.

10. Device (100) according to any of claims 1 to 9, **characterized in that** a second partially transparent mirror (170) is arranged between the mirror (104) and the person, which mirror is arranged in or on the housing (101) in such a way that a part of the incident light is transmitted parallel to the beam path (105) of the camera (103) in the direction of the mirror (104) and a second part of the light is reflected parallel to the beam path (105) of the camera (103) in the direction of the person.

11. A method of detecting biometric characteristics of a face (110) of a person with a device (100) according to any one of claims 2 to 10, this comprising the following steps:
A) Detecting a person touching the control unit (107) or automated detection of a person being in front of the control unit (107);
B) capturing one or more overview images by means of an overview camera (130);
C) centering the person's face (110) based on the one or more overview images by adjusting the vertical and/or horizontal orientation of a camera (103) and/or a housing (101);
D) capturing at least one facial image by the camera (103); and
E) acquisition of the biometric data in the facial image, quality assessment and presentation attack detection by means of an evaluation and/or control unit (109).

12. Method according to claim 11, **characterized in that** step B) comprises the following further step:
- Detection of the position of the face on the overview image preferably by edge detection and/or color detection by means of the evaluation and/or control unit.

13. Method according to claim 11 or 12, **characterized in that** step B) comprises the following further step:
- Evaluation of the distance between the overview camera and the face of the person by means of triangulation.

14. Method according to any one of claims 11 to 13, **characterized in that** step E) comprises at least one of the following further steps:
- Determining the position of the pupils in the eye by edge and/or color recognition in the facial image; and/or
- determination of the head tilt of the person in the facial image; and/or
- detection of reflexes; and/or
- Evaluation of the depth of field of the facial image.

15. Method according to any one of claims 11 to 14, **characterized in that** step A) is followed by the following further step:
- Detecting whether the person to be photographed is wearing glasses by means of a spectacle detection unit (150).

## Revendications

1. Dispositif (100) de détection des caractéristiques biométriques d'un visage (110) d'une personne, avec un boîtier (101), lequel présente une face avant de boîtier (102) tournée vers la personne et au sein duquel sont agencés une caméra (103) présentant une première distance focale permettant de détecter les caractéristiques biométriques et un miroir (104) permettant de plier un trajet de faisceau (105) s'étendant entre le visage (110) de la personne et la caméra (103), et avec un serveur (107) qui se trouve en communication (111) sans fil ou par fil avec une unité d'évaluation et/ou de commande (109), lequel présente un affichage (115) et lequel est agencé entre la face avant de boîtier (102) et la personne, dans lequel le serveur (107) est agencé incliné avec un angle d'inclinaison (α) par rapport à la face avant de boîtier (102) afin de générer une longueur prédéterminée du trajet de faisceau (105), **caractérisé en ce qu'**un filtre de protection de la vue est agencé sur l'affichage (115) du serveur (167) de telle manière que l'affichage (115) n'est visible que sous des angles de vue prédéterminés.

2. Dispositif (100) selon la revendication 1, **caractérisé en ce qu'**une caméra à vision panoramique (130) est dotée d'une seconde distance focale, dans lequel la longueur d'un second trajet de faisceau (131) entre la caméra à vision panoramique (130) et le visage (110) de la personne est inférieure à la longueur du trajet de faisceau (105) entre la caméra (103) et le visage (110) de la personne.

3. Dispositif (100) selon la revendication 2, **caractérisé en ce que** le miroir (104) est au moins partiellement transparent et est agencé de telle manière que la lumière réfléchie par le miroir (104) est dirigée sur la caméra (103) et la lumière transmise par le miroir (104) est dirigée sur la caméra à vision panoramique (130).

4. Dispositif (100) selon l'une quelconque des revendications 1 à 3, **caractérisé en ce qu'**une unité d'éclairage (140) qui est formée de plusieurs éléments d'éclairage (141) pouvant être commandés de manière individuelle ou conjointe grâce à l'unité d'évaluation et/ou de commande (109) est agencée sur la face avant de boîtier (102).

5. Dispositif (100) selon la revendication 4, **caractérisé en ce que** l'unité d'éclairage (140) est formée en plusieurs parties et **en ce qu'**au moins une partie de l'unité d'éclairage (140) est agencée latéralement par rapport au trajet de faisceau (105) sur un premier côté de la face avant de boîtier (102) et au moins une autre partie est agencée latéralement par rapport au trajet de faisceau (105) sur un second côté de la face avant de boîtier (102).

6. Dispositif (100) selon l'une quelconque des revendications 1 à 5, **caractérisé en ce qu'**une caméra proche infrarouge est prévue en vue d'une mesure de distance et/ou d'une détection d'attaque de présentation.

7. Dispositif (100) selon l'une quelconque des revendications 1 à 6, **caractérisé en ce qu'**une unité optique de détection de lunettes (150) est prévue dans le boîtier (101).

8. Dispositif (100) selon la revendication 7, **caractérisé en ce que** l'unité de détection de lunettes (150) comprend une source lumineuse UV (152) et un détecteur UV (151).

9. Dispositif (100) selon l'une quelconque des revendications 1 à 8, **caractérisé en ce que** le serveur (107) est réalisée sous la forme d'un écran tactile présentant un affichage (115) et sur lequel l'image détectée par la caméra (103) peut être montrée.

10. Dispositif (100) selon l'une quelconque des revendications 1 à 9, **caractérisé en ce qu'**un second miroir (170) partiellement transparent est agencé entre le miroir (104) et la personne, lequel est agencé dans ou sur le boîtier (101) de telle manière qu'une partie de la lumière incidente est transmise en direction du miroir (104) parallèlement au trajet de faisceau (105) de la caméra (103) et une seconde partie de la lumière est réfléchie en direction de la personne parallèlement au trajet de faisceau (105) de la caméra (103).

11. Procédé de détection de caractéristiques biométriques du visage d'une personne (110) avec un dispositif (100) selon l'une quelconque des revendications 2 à 10, comprenant les étapes ci-dessous consistant à :
A) détecter un contact entre le serveur (107) et une personne ou détecter automatiquement une personne se trouvant devant l'unité de commande (107) ;
B) capturer une ou plusieurs image(s) panoramique(s) au moyen d'une caméra à vision panoramique (130) ;
C) centrer le visage (110) de la personne en se basant sur la ou les image(s) panoramique(s) grâce à un ajustement de l'orientation verticale et/ou horizontale d'une caméra (103) et/ou d'un boîtier (101) ;
D) capturer au moins une image de visage grâce à la caméra (103) ; et
E) détecter les données biométriques au sein de l'image de visage, évaluer la qualité et détecter une attaque de présentation au moyen d'une unité d'évaluation et/ou de commande (109).

12. Procédé selon la revendication 11, **caractérisé en ce que** l'étape B) comprend l'étape supplémentaire ci-dessous consistant à :
- reconnaitre la position du visage sur l'image panoramique de manière préférée par reconnaissance de bord et/ou reconnaissance de couleur au moyen de l'unité d'évaluation et/ou de commande.

13. Procédé selon la revendication 11 ou 12, **caractérisé en ce que** l'étape B) comprend l'étape supplémentaire ci-dessous consistant à :
- évaluer la distance entre la caméra à vision panoramique et le visage de la personne au moyen d'une triangulation.

14. Procédé selon l'une quelconque des revendications 1 à 4, **caractérisé en ce que** l'étape E) comprend au moins une des autres étapes ci-dessous consistant à :
- déterminer la position des pupilles au sein de l'œil par reconnaissance de bord et/ou reconnaissance de couleur au sein de l'image de visage ; et/ou
- déterminer l'inclinaison de tête de la personne au sein de l'image de visage ; et/ou
- détecter des réflexes ; et/ou
- évaluer la profondeur de champ de l'image de visage.

15. Procédé selon l'une quelconque des revendications 11 à 14, **caractérisé en ce qu'**après l'étape A) vient l'étape supplémentaire ci-dessous consistant à :
- reconnaitre si la personne à photographier porte des lunettes au moyen d'une unité de détection de lunettes (150).
